# EUROPÄISCHE PATENTANMELDUNG

(11) **EP 1 006 083 A1**
(43) Veröffentlichungstag der Anmeldung: **07.06.2000**
(21) Anmeldenummer: 98122792.9
(22) Anmeldetag: 01.12.1998
(51) Int. Cl.: C02F 1/48

(54) **Permanentmagnetisches Flüssigkeitsbehandlungsgerät**

(71) Anmelder: PERMA TRADE WASSERTECHNIK GmbH, D-71229 Leonberg-Höfingen (DE)
(72) Erfinder: Sautter, Hans, 70469 Stuttgart (DE)
(74) Vertreter: Kern, Wolfgang, Dipl.-Ing.

(57) **Zusammenfassung**

Permanentmagnetisches Flüssigkeitsbehandlungsgerät mit einem paramagnetischen, rohrförmigen Gehäuse (1), das von der zu behandelnden Flüssigkeit durchströmbar ist und in dem koaxial zur Gehäuselängsachse (10) um eine koaxial zur Gehäuselängsachse liegende stählerne Kernspindel (15) Ringmagnete (3) und Polschuhe (4) bildende Distanzringe aus Eisen angeordnet sind, mit an den beiden Gehäuseenden angebrachten Anschlußstücken (7,8) und mit einer Fördervorrichtung (9) für die zu behandelnde Flüssigkeit im Gehäuseinneren, ferner mit einem in dem Gehäuse (1) koaxial zu dessen Längsachse (10) und mit Abstand von dessen Innenwand (16) angeordneten, die zu behandelnde Flüssigkeit durch das Gehäuse (1) hindurchleitenden Innenrohre (2) aus Kunststoff, dessen beiden Enden (17,18) mit den Ansclußstücken (7,8) flüssigkeitsdicht verbunden sind, deren Durchflußquerschnitte sich in Richtung auf die Gehäuseenden (5,6) erweitern, wobei die Fördervorrichtung (9) in wenigstens einer der beiden Erweiterungen (13,14) der Anschlußstücke angeordnet ist, und die Ringmagnete (3) und Polschuhe (4) in dem flüssigkeitsfreien Raum zwischen dem Innenrohr (2) und dem Gehäuse (1) in Richtung der Gehäuselängsachse (10) hintereinanderliegend eingebaut sind, wobei die Oberfläche (34) der Kernspindel (15) zur Konzentrierung des von den Ringmagneten (3) erzeugten Magnetfeldes auf die Mitte der Polschuhe (4) mit Nocken (35) versehen ist, wobei im wesentlichen jeder Nocken (35) einem Polschuh (4) gegenüberliegt.

## Beschreibung

Die Erfindung betrifft ein permanentmagnetisches Flüssigkeitsbehandlungsgerät gemäß dem Oberbegriff des Anspruchs 1.

Das bekannte Gerät (EP 427 241) hat es sich bereits zur Aufgabe gemacht, den Wirkungsgrad bei der mit derartigen Geräten erfolgten Wasserbehandlung im Hinblick auf die Kalkausfällung bzw. die Vermeidung von Kalkablagerungen auf den Innenwänden von Wasserleitungsrohren zu verbessern und auch eine Verbesserung des Abtrags alter Inkrustationen zu erreichen sowie die Rohrkorrosion zu vermindern. Im Zuge dieser Verbesserungen wurde auch eine schneckenförmige Fördervorrichtung für das zu behandelnde Wasser geschaffen, die in den Anschlußstücken zu beiden Enden des Gerätes angeordnet ist und dazu dient, das zu behandelnde Wasser spiralförmig durch das Gehäuse des Gerätes hindurchzuführen und damit zwischen Gehäuseeintritt und Gehäuseaustritt einen längeren Weg zurücklegen zu lassen, währenddessen das Wasser der Wirkung eines magnetischen Feldes ausgesetzt wird, wodurch die Wassermoleküle in besonderem Maße in Schwingung gesetzt werden mit der Folge, daß die im Wasser mitgeführten Spurenteilchen als Keime für das überkonzentrierte Kalziumkarbonat zugänglich werden, so daß sich das gelöste Kalziumkarbonat an den Keimen anlagert und sich nicht an der Wandung der das Wasser führenden Rohrleitungen ablagerte, sondern zusammen mit den Keimen ausgeschwemmt wird.

Obgleich das bekannte Gerät auf dem Gebiete der Wasserbehandlung zur Vermeidung von Kalkablagerungen und Inkrustationen zu außerordentlich bemerkenswerten Erfolgen geführt hat, wurden Überlegungen angestellt, den Wirkungsgrad des Gerätes diesbezüglich weiter zu verbessern.

Der vorliegenden Erfindung liegen derartige Überlegungen zugrunde. Sie führen nunmehr im Ergebnis zu dem Vorschlag, die Oberfläche der Kernspindel zur Zentrierung des von den Ringmagneten erzeugten Magnetfeldes auf die Mitte der Polschuhe mit Nocken zu versehen, wobei im wesentlichen jeder Nocken einem Polschuh gegenüberliegt. Auf diese Weise wird die Konzentration der von den Ringmagneten erzeugten Magnetfelder auf die Kernspindel erheblich verbessert und damit die Wirkung dieser Felder auf das das Innenrohr spiralförmig durchströmende Wasser verstärkt.

Zur Optimierung dieser Wirkungsweise sollten die Nocken ringförmig ausgebildet sein und einen trapzeförmigen Querschnitt aufweisen, wobei sich besonders bewährt hat, den Neigungswinkel der schrägen Oberflächen der Nocken zur Längsachse des Gehäuses bzw. der Kernspindel auf etwa 30° festzulegen, so daß sich die beiden sich in der Spitze jedes Nockens schneidenden Oberflächen des trapezförmigen Querschnitts unter einem Winkel von etwa 120° treffen.

Die Optimierung der erfindungsgemäßen Konstruktion wird insbesondere aber dadurch vervollständigt, daß die den Nocken mit Abstand gegenüberliegenden Polschuhe in Richtung auf die Nocken zur Bildung einer Spitze verjüngt ausgebildet werden und daß die Spitze jedes Polschuhes Bestandteil eines in sich geschlossenen höckerförmigen Rings ist, der am Ende eines sich verjüngenden Abschnitts trapezförmigen Querschnitts liegt.

In diesem Zusammenhang hat sich auch bewährt, die zwischen den Polschuhen befindlichen Ringmagnete von der Oberfläche des Innenrohres mit Abstand getrennt zu halten, wobei vorteilhafterweise der Abstand etwa der Höhe der Polschuhspitze entsprechen kann.

Weitere vorteilhafte Ausgestaltungen sind in den Unteransprüchen gekennzeichnet. Die Erfindung wird im folgenden an Hand des in der Zeichnung dargestellten Ausführungsbeispiels näher erläutert. In der Zeichnung zeigen:
- Fig. 1: eine Längsschnittansicht einer ersten Ausführungsform des erfindungsgemäßen Flüssigkeitsbehandlungsgerätes,
- Fig. 2: eine Längsschnittansicht einer zweiten Ausführungsform des erfindungsgemäßen Flüssigkeitsbehandlungsgerätes,
- Fig. 3: eine längsgeschnittene Seitenansicht eines der beiden Anschlußstücke des Gerätes von Fig. 1 und Fig. 2,
- Fig. 4: eine Stirnansicht des Anschlußstücks von Fig. 3 in Richtung des Pfeils A,
- Fig. 5: eine Längsschnittansicht der schneckenförmigen Fördervorrichtung des Gerätes,
- Fig. 6: eine Stirnansicht der Vorrichtung von Fig. 5 in Richtung des Pfeils A,
- Fig. 7: eine Längsschnittansicht der Zentriervorrichtung für die Kernspindel des Gerätes,
- Fig. 8: eine Stirnansicht der Zentriervorrichtung von Fig. 7 in Richtung des Pfeils A und
- Fig. 9: einen vergrößerten Ausschnitt der Längsschnittdarstellung von Fig. 2.

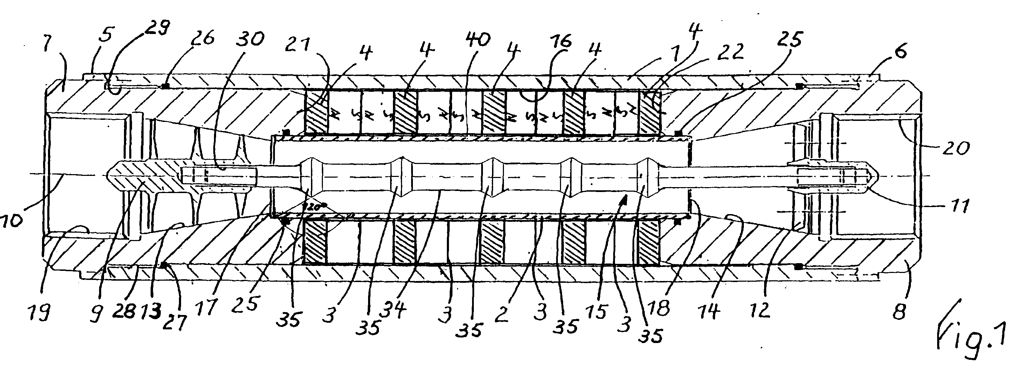

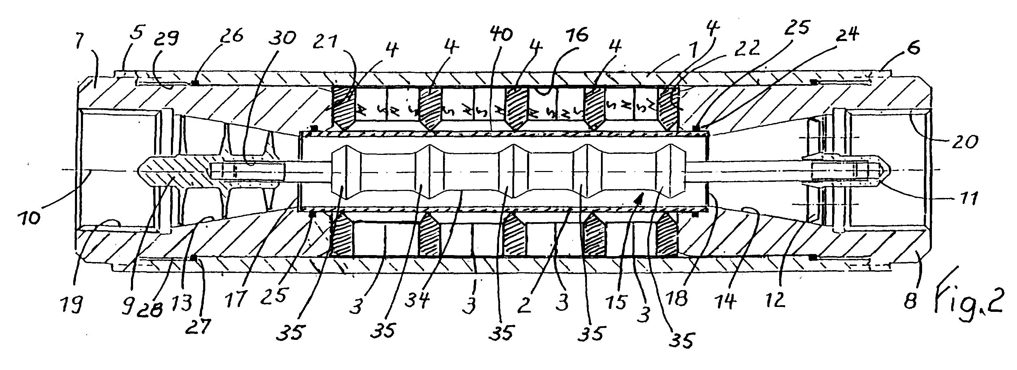

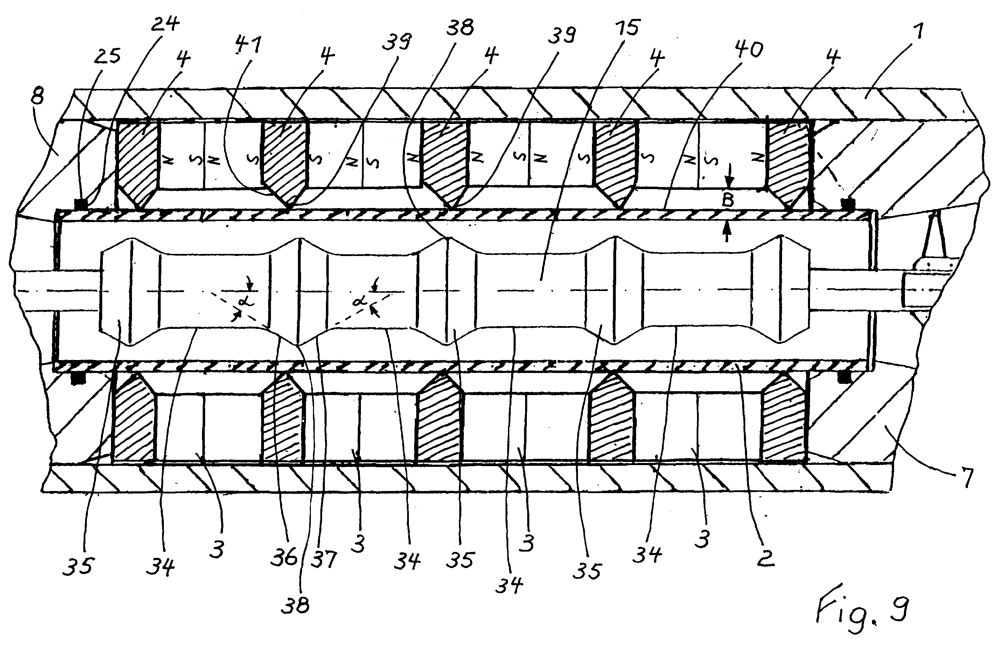

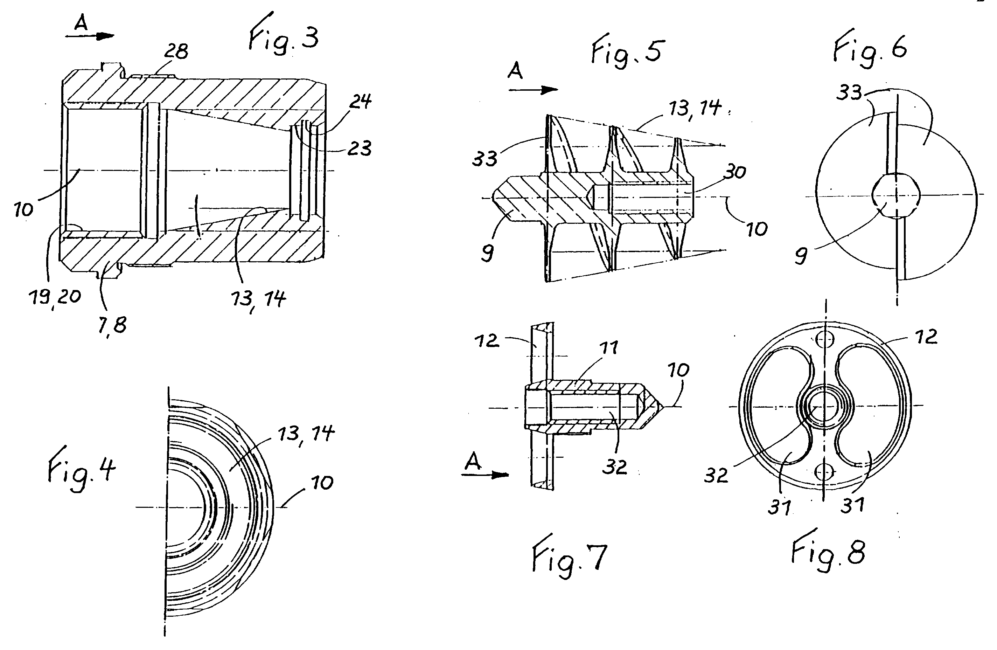

Die in den Figuren 1 und 2 dargestellten Geräte zur permanentmagnetischen Flüssigkeitsbehandlung dienen insbesondere zur Behandlung von Wasser und sind mit einem paramagnetischen, rohrförmigen Gehäuse 1 ausgestattet, das von der zu behandelnden Flüssigkeit von links nach rechts durchströmt wird. An den beiden Enden 5 und 6 des Gehäuses sind Anschlußstücke 7, 8 zum Einbau des Gehäuses in eine Wasserrohrleitung vorgesehen. Eines dieser Anschlußstücke ist im Längsschnitt in Fig. 3 dargestellt und durch ein Außengewinde 28 mit einem Innengewinde 29 des Gehäuses 1 verschraubt sowie durch Dichtungsringe 26, die in Ringnuten 27 auf der Innenwand 16 des Gehäuses 1 sitzen, dicht mit dem Gehäuse verbunden. In dem Gehäuse 1 befindet sich koaxial zu seiner Längsachse 10 und mit Abstand von seiner Innenwand 16 ein das zu behandelnde Wasser durch das Gehäuse hindurchleitendes Innenrohr 2 aus Kunststoff dessen beidseitige Enden 17, 18 mit den Anschlußstücken 7,8 durch in Ringnuten 24 der Anschlußstücke sitzende Dichtungsringe 25 flüssigkeitsdicht verbunden sind. Die Innenrohrenden sitzen auf einer in Fig. 3 dargestellten Schulter 23 des jeweiligen Anschlußstücks und werden beim Zusammenschrauben der Anschlußstücke 7,8 mit dem Gehäuse 1 axial verspannt.

Der Durchflußquerschnitt der Anschlußstücke 7, 8 erweitert sich in Richtung auf die Gehäuseenden 5, 6. Diese konischen Erweiterungen 13, 14, die aus den Figuren 3 und 4 ersichtlich sind, sind an ihren inneren Enden, also im Bereich der Ringnut 23 der Anschlußstücke, an den Durchflußquerschnitt des Innenrohres 2 angepaßt, so daß sie direkt auf diesen Querschnitt übergehen, während die äußeren Enden dieser konischen Erweiterungen in zylindrische geformte Gewindestücke 19,20 übergehen, mit denen die nicht dargestellten Teile der Rohrleitung verschraubt werden, in die das Gerät eingebaut wird. Zwischen dem Innenrohr 2 und dem rohrförmigen Gehäuse 1 liegt ein Ringraum, der durch die Dichtungsringe 25 und 26 sowie die inneren Enden 21, 22 der Anschlußstücke 7, 8 stirnseitig flüssigkeitsdicht abgeschlossen ist. In diesem Ringraum sind in Richtung der Längsachse 10 mehrere Ringmagnete 3 und Eisenpolschuhe bildende Distanzringe 4 aneinandergereiht angeordnet, wobei die Ringmagnete 3 axial magnetisiert sind und jeweils paarweise gegenpolig zusammenliegen, wie in der Zeichnung durch die Polbezeichnungen N - S bzw. S - N verdeutlicht wird. Jeweils zwei aufeinanderfolgende Ringmagnetpaare sind durch einen Distanzring 4 voneinander getrennt. Bei der Ausführungsform gemäß Fig. 1 sitzen die Ringmagnete und Distanzringe auf dem Innenrohr 2 auf und erzeugen Magnetfelder, die überwiegend im rechten Winkel zur spiralförmigen Strömung des das Innenrohr 2 durchströmenden Wassers ausgerichtet sind, die durch eine schneckenförmige Fördervorrichtung 9 erzeugt wird. Diese Fördervorrichtung, die, wie die Figuren 5 und 6 zeigen, als doppelläufige Schnecke ausgebildet ist, sitzt in der konischen Erweiterung 13 des Anschlußstücks 7, wobei der Durchmesser der Schneckengänge an diese konische Erweiterung angepaßt ist, wie aus der Zeichnung ersichtlich.

Das andere, also abstromseitige Ende der Kernspindel 15 innerhalb des Anschlußstücks 8 sitzt in einer scheibenförmigen Zentriervorrichtung 11, 12, wie aus den Figuren 7 und 8 ersichtlich, und zwar in einer Bohrung 32 der Nabe 11 dieser Zentriervorrichtung. Die Zentrierscheibe 12 sitzt auf der konischen Erweiterung 14 des Anschlußstückes 8, wie aus den Figuren 1 und 2 hervorgeht, und ist mit zwei großen Wasserdurchflußöffnungen 31 versehen, die beidseitig der Nabe 11 liegen.

Das Innenrohr 2 ist auf seiner Innenseite glattwandig ausgebildet, also mit keinen Schikanen versehen, und wird zentrisch zur Längsachse 10 von der Kernspindel 15 durchzogen, die in die Anschlußstücke 7 und 8 hineinragt. Das zustromseitige Ende dieser Kernspindel, deren Durchmesser im Vergleich zum Durchmesser des Innenrohres klein ist, um den Durchflußquerschnitt des Innenrohres nicht zu stark zu reduzieren, sitzt in einer Bohrung 30 der schneckenförmigen Fördervorrichtung 9.

Wie aus den Figuren 1, 2 und 9 ersichtlich, ist die Oberfläche 34 der Kernspindel 15 mit Nocken 35 versehen, die in Richtung der Längsachse 10 mit Abstand so aufeinanderfolgend ausgebildet sind, daß im wesentlichen jeder Nocken 35 einem Polschuh 4 gegenüberliegt. Diese Nocken verbessern die Zentrierung des von den Ringmagneten 3 erzeugten Magnetfeldes auf die Mitte der Polschuhe 4, sind gleichfalls ringförmig ausgebildet und haben einen trapezförmigen Querschnitt. Der Neigungswinkel α ihrer schrägen Oberflächen 36, 37 zur Längsachse 10 des Gehäuses 1 bzw. zur Kernspindel 15 beträgt etwa 30°, so daß die beiden schrägen Oberflächen 36, 37, wie aus Fig. 9 ersichtlich, an der Spitze 38 des Nockens 35 unter einem Winkel von etwa 120° aufeinandertreffen. Das Durchmesserverhältnis von Nocken zu Kernspindel ist variabel, beträgt aber vorteilhafterweise 5:3.

Bei der in Fig. 1 dargestellten Ausführungsform des Gerätes sitzen die Polschuhe 4 zusammen mit den zwischen ihnen befindlichen Ringmagneten 3 auf der äußeren Oberfläche 40 des Innenrohres 2. Bei der in Fig. 2 gezeigten Ausführungsform des Gerätes sind die den Nocken 35 mit Abstand gegenüberliegenden Polschuhe 4 zur Bildung einer Spitze 39 wie aus Fig. 9 ersichtlich in Richtung auf die Nocken verjüngt ausgebildet, wobei wenigstens einige der Spitzen 39 der Polschuhe die äußere Oberfläche 40 des Innenrohres 2 berühren. Durch diese Ausgestaltung bei der die zwischen den Polschuhen 4 befindlichen Ringmagneten 3 von der Oberfläche 40 in einem Abstand B getrennt sind (Fig. 9), der etwa der Höhe der Polschuhspitze 39 entspricht und die Spitze 39 jedes Polschuhes am Ende eines sich verjüngenden, höckerförmigen Abschnitts 41 eines geschlossenen Rings trapezförmigen Querschnitts liegt, der dem trapezförmigen Querschnitt der Nocken 35 in etwa entspricht, kommt es in besonderem Maße zur Ausbildung von Magnetfeldern die halbkreisförmig von einem Polschuh 4 zum anderen wandern und in Verbindung mit der zwischen der Nockenoberfläche und der inneren Oberfläche des Innenrohres 2 erhöhten Strömungsgeschwindigkeit des Wasser zu einer Intensivierung der magnetischen Feldwirkung auf das Wasser führen, so daß im Vergleich zu den bekannten Geräten die Kesselsteinbildung verstärkt verringert wird und die Auflösung von vorhandenen Kalkablagerungen in Rohrleitungen beschleunigt wird.

## Patentansprüche

1. Permanentmagnetisches Flüssigkeitsbehandlungsgerät mit einem paramagnetischen, rohrförmigen Gehäuse (1), das von der zu behandelnden Flüssigkeit durchströmbar ist und in dem koaxial zur Gehäuselängsachse (10) um eine koaxial zur Gehäuselängsachse liegende stählerne Kernspindel (15) Ringmagnete (3) und Polschuhe (4) bildende Distanzringe aus Eisen angeordnet sind, mit an den beiden Gehäuseenden angebrachten Anschlußstücken (7, 8) und mit einer Fördervorrichtung (9) für die zu behandelnde Flüssigkeit im Gehäuseinneren, ferner mit einem in dem Gehäuse (1) koaxial zu dessen Längsachse (10) und mit Abstand von dessen Innenwand (16) angeordneten, die zu behandelnde Flüssigkeit durch das Gehäuse (1) hindurchleitenden Innenrohre (2) aus Kunststoff; dessen beiden Enden (17, 18) mit den Anschlußstücken (7, 8) flüssigkeitsdicht verbunden sind, deren Durchflußquerschnitte sich in Richtung auf die Gehäuseenden (5, 6) erweitern, wobei die Fördervorrichtung (9) in wenigstens einer der beiden Erweiterungen (13, 14,) der Anschlußstücke angeordnet ist, und die Ringmagnete (3) und Polschuhe (4) in dem flüssigkeitsfreien Raum zwischen dem Innenrohr (2) und dem Gehäuse (1) in Richtung der Gehäuselängsachse (10) hintereinanderliegend eingebaut sind, **dadurch gekennzeichnet,** daß die Oberfläche (34) der Kernspindel (15) zur Konzentrierung des von den Ringmagneten (3) erzeugen Magnetfeldes auf die Mitte der Polschuhe (4) mit Nocken (35) versehen ist, wobei im wesentlichen jeder Nocken (35) einem Polschuh (4) gegenüberliegt.

2. Gerät nach Anspruch 1, **dadurch gekennzeichnet,** daß die Nocken (35) ringförmig ausgebildet sind.

3. Gerät nach Anspruch 1 oder 2, **dadurch gekennzeichet,** daß die Nocken (35) einen trapezförmigen Querschnitt aufweisen.

4. Gerät nach Anspruch 3, **dadurch gekennzeichnet,** daß der Neigungswinkel α der schrägen Oberflächen (36, 37) jedes Nockens (35) zur Längsachse (10) des Gehäuses (1) bzw. der Kernspindel (15) etwa 30° beträgt, so daß die beiden schrägen Oberflächen (36, 37) an der Spitze (38) des Nockens (35) unter einem Winkel von etwa 120° aufeinander treffen.

5. Gerät nach einem der Ansprüche 1 - 4, **dadurch gekennzeichnet,** daß das Durchmesserverhältnis von Nocken (35) zu Kernspindel (15) etwa 5:3 beträgt.

6. Gerät nach einem der Ansprüche 1 - 5, **dadurch gekennzeichnet,** daß die den Nocken (35) mit Abstand gegenüberliegenden Polschuhe (4) zur Bildung einer Spitze (39) in Richtung auf die Nocken veijüngt sind.

7. Gerät nach Anspruch 6, **dadurch gekennzeichnet,** daß wenigstens einige der Spitzen (39) der Polschuhe (4) die äußere Oberfläche (40) des Innenrohres (2) berühren.

8. Gerät nach Anspruch 6 oder 7, **dadurch gekennzeichnet,** daß die Spitze (39) jedes Polschuhes (4) am Ende eines sich verjüngenden, höckerförmigen Abschnitts (41) eines geschlossenen Rings trapezförmigen Querschnitts ausgebildet ist.

9. Gerät nach Anspruch 8, **dadurch gekennzeichent,** daß der trapezförmige Querschnitt der Polschuhe (4) dem trapezförmigen Querschnitt der Nocken (35) entspricht.

10. Gerät nach einem der Ansprüche 1 - 9, **dadurch gekennzeichnet,** daß die zwischen den Polschuhen (4) befindlichen Ringmagneten (3) von der Oberfläche (40) des Innenrohres (2) in einem Abstand (B) getrennt sind.

11. Gerät nach Anspruch 10, **dadurch gekennzeichnet,** daß der Abstand (B) etwa der Höhe der Polschuhspitze (39) entspricht.
